# FASCICULE DE BREVET EUROPEEN

(11) **EP 3 649 218 B1**
(45) Date de publication et mention de la délivrance du brevet: **06.09.2023**
(21) Numéro de dépôt: 18733901.5
(22) Date de dépôt: 03.07.2018
(51) Int. Cl.: C10L 5/04, C10L 5/36, C10L 5/44, C10L 9/08

(54) **PROCÉDÉ DE TRAITEMENT DE LA BIOMASSE PAR CO-BROYAGE AVEC UNE CHARGE FOSSILE**
VERFAHREN ZUR VERARBEITUNG VON BIOMASSE DURCH VERMAHLEN MIT EINEM ROHSTOFF AUF FOSSILER BASIS
METHOD FOR PROCESSING BIOMASS BY CO-GRINDING WITH A FOSSIL-BASED FEEDSTOCK

(30) Priorité: 07.07.2017 FR 1756406
(43) Date de publication de la demande: 13.05.2020
(73) Titulaire: IFP Energies nouvelles, 92852 Rueil-Malmaison Cedex (FR); AXENS, 92508 Rueil-Malmaison Cedex (FR); Commissariat à l'énergie atomique et aux énergies alternatives, 75015 Paris (FR); TotalEnergies OneTech, 92400 Courbevoie (FR); thyssenkrupp Industrial Solutions AG, 45143 Essen (DE); Avril, 75008 Paris (FR); Bionext, 60280 Venette (FR)
(72) Inventeur: PLENNEVAUX, Thomas, 69002 Lyon (FR); GAZARIAN, Jeremy, 69420 Condrieu (FR); BOURNAY, Laurent, 69440 Chaussan (FR); ULLRICH, Norbert, 45139 Essen (DE)
(74) Mandataire: IFP Energies nouvelles
(86) Numéro de dépôt international: PCT/EP2018/067911
(87) Numéro de publication internationale: WO 2019/007938

(56) Documents cités:
- WO-A1-2014/068253
- DE-A1- 19 618 880
- FR-A1- 2 924 435
- US-A1- 2011 179 701
- US-A1- 2011 226 603
- US-A1- 2011 314 728
- US-A1- 2013 104 450
- US-A1- 2014 173 929
- US-A1- 2014 305 033

## Description

### DOMAINE TECHNIQUE

La présente invention a pour objet le traitement de biomasse pour sa préparation dans le but de sa valorisation notamment par gazéification pour la production d'hydrocarbures liquides, et éventuellement la production de bases pétrochimiques et/ou de bases chimiques et/ou d'hydrogène.

Plus particulièrement, la présente invention concerne un procédé de traitement d'une charge comprenant de la biomasse en vue de son injection dans un réacteur de gazéification pour la production d'hydrocarbures notamment des essences et du gazole et du kérosène.

### ART ANTERIEUR

Dans le domaine de l'invention, l'homme du métier cherche constamment à améliorer le conditionnement de la biomasse notamment pour améliorer son pouvoir calorifique.

Plus particulièrement, l'amélioration de la granulométrie de la poudre obtenue par le procédé de traitement à partir de la biomasse et le coût énergétique associé à ce traitement, sont des paramètres essentiels de la préparation de la biomasse notamment dans des procédés plus globaux de gazéification.

Le traitement de la biomasse est bien connu de l'homme de l'art pour sa valorisation par la production d'hydrocarbures. Les principales étapes de ce traitement sont le séchage, le traitement thermique, tel que la torréfaction et le broyage. Ces étapes sont notamment décrites dans les demandes WO2014/068253. Les principaux paramètres de ce traitement sont les caractéristiques de la poudre obtenue, notamment ces dimensions, ainsi que le coût énergétique du broyage et plus généralement du procédé.

La demande WO2013/114328 décrit un procédé de broyage de charge carbonée issu de la biomasse en présence d'additifs sous forme de poudre de dimension micronique, issu de matière minérale telle que le stéarate de magnésium ou la silice sous forme de micro perle et/ou végétale telle que le charbon de bois ou le charbon fossile, dans le but d'améliorer les propriétés de la poudre obtenue par le broyage de la biomasse telles que la coulabilité et l'aptitude à la fluidisation, et ainsi de permettre l'obtention d'un mélange intime de poudres de faibles granulométries. Ce document ne décrit pas l'utilisation d'additifs autre que sous forme de poudre et uniquement à des dimensions microniques, lors du broyage de la biomasse.

L'optimisation du traitement et du conditionnement de la biomasse, notamment par la simplification des procédés mis en oeuvre, la diminution du coût énergétique desdites étapes, notamment l'étape de broyage reste un enjeu important du domaine de l'invention.

De manière surprenante, la demanderesse a découvert un procédé de traitement d'une charge biomasse par au moins une étape de co-broyage de ladite charge en mélange avec au moins une charge fossile solide. Avantageusement, ledit co-broyage permet le broyage des charges ainsi que le séchage et le broyage de la charge fossile. En effet le broyage de la charge biomasse est une étape exothermique et la chaleur générée permet avantageusement de sécher simultanément la charge fossile. Un autre avantage du procédé selon l'invention est la diminution du coût énergétique du procédé par l'intégration énergétique des gaz formés lors des différentes étapes.

### RESUME DE L'INVENTION

Un objet de la présente invention est de fournir un nouveau procédé de traitement d'une charge comprenant de la biomasse solide, ledit procédé comprenant au moins les étapes suivantes :
a) Une étape de séchage de ladite charge à une température comprise entre 20 et 180°C, pendant une durée comprise entre 5 et 180 minutes,
b) Une étape de torréfaction de la charge séchée issue de l'étape a) pour produire au moins un effluent solide biomasse torréfiée, et
c) Une étape de co-broyage de l'effluent solide biomasse torréfiée issu de l'étape b) en présence d'au moins une charge fossile solide pour obtenir une poudre,
dans lequel
la quantité d'eau résiduelle en sortie de l'étape a) de séchage est comprise entre 0,0 % et 5,0 % massique par rapport à la masse totale de la charge,
les dimensions de la charge fossile solide introduite à l'étape c) de co-broyage sont comprises entre 1,0 et 100 millimètres et de préférence entre 2,0 et 80 millimètres ou entre 3,0 et 70 millimètres,
la charge fossile solide, entrant dans l'étape c) de co-broyage à un taux d'humidité compris entre 3,1 et 30,0 % massique, préférentiellement entre 4,0 et 25,0 % massique ou entre 5,0 et 20,0 % massique,
dans lequel une étape d) de séchage de la poudre obtenue à l'issue de l'étape c) est réalisée simultanément à l'étape c) de co-broyage.

Un avantage du procédé selon la présente invention est de permettre l'obtention d'un mélange intime de poudres de faibles granulométries provenant de charges biomasse et fossile.

Un avantage du co-broyage selon la présente invention est de permettre le séchage de la charge fossile simultanément à ladite étape de co-broyage par le transfert de l'énergie thermique générée par le broyage de la biomasse vers la charge fossile.

Un autre avantage de la présente invention est de permettre le traitement de la biomasse à un coût énergétique limité grâce à la combinaison d'un enchainement d'étapes opérant dans des conditions spécifiques permettant leur intégration énergétique.

De préférence, la biomasse est choisie parmi tout type de biomasse, de préférence de la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.

De préférence, le procédé comprend une étape i) de prétraitement de la biomasse, de préférence de broyage primaire.

De préférence, l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,1 et 15 bar, de manière préférée entre 0,1 et 10 bar et de manière plus préférée entre 0,5 et 1,5 bar.

De préférence, le procédé comprend une étape ii) de combustion des gaz de torréfaction (11) issu de l'étape b).

De préférence, l'énergie issue de l'étape ii) de combustion des gaz de torréfaction (11) est utilisée pour apporter l'énergie thermique nécessaire dans une étape du procédé, de préférence à aux étapes a), b) et/ou d).

De préférence, la charge fossile solide (9) introduite dans l'étape c) de co-broyage est choisie parmi les hydrocarbures fossiles solides tels que du charbon, du coke de pétrole, des résidus pétroliers, des sables bitumineux ou leurs dérivés et des schistes bitumineux ou leurs dérivés.

De préférence, la charge fossile solide (9) est soumise à une étape iii) de séchage préliminaire.

De préférence, l'effluent solide biomasse torréfiée issu de l'étape b) est introduite dans l'étape c) de co-broyage dans un pourcentage massique entre l'effluent solide biomasse torréfiée dans la charge totale solide compris entre 1 et 99 % massique, de préférence entre 50 et 98 % massique, et préférentiellement entre 40 et 95% massique, ladite charge totale solide étant la somme de l'effluent solide de biomasse torréfiée et de la charge fossile.

De préférence, la charge fossile solide, entrant dans l'étape c) de co-broyage à un taux d'humidité compris entre 5 et 20 % massique.

De préférence, le procédé comprend une ou plusieurs étapes de stockage e) de l'effluent issu de l'une ou quelconque des étapes du procédé, de préférence de l'étape a), b), c), ou d).

De préférence, le procédé comprend une étape f) de transport, de préférence de transport pneumatique.

De préférence, le procédé comprend une étape g) de gazéification à une température comprise entre 800 et 1800°C, de préférence entre 1000 et 1600°C et plus préférentiellement entre 1200 et 1500°C et à une pression absolue avantageusement comprise entre 20 et 120 bar, de préférence entre 25 et 60 bar, et plus préférentiellement entre 30 et 50 bar.

### DEFINITIONS & ABREVIATIONS

Dans l'ensemble de la description les termes ou abréviations ci-après ont le sens suivant :
On entend par biomasse, de façon non limitative, la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation

On entend par matière fossile solide, de façon non limitative, la matière prise seule ou en mélange, à l'état solide dans les conditions de l'étape de broyage et choisie parmi, les hydrocarbures fossiles solides tels que du charbon, du coke de pétrole (petcoke selon la terminologie anglo-saxonne), des résidus pétroliers, des sables bitumineux ou leurs dérivés et des schistes bitumineux ou leurs dérivés.

On entend par perte de masse anhydre, la pourcentage de matière perdue lors de l'étape de torréfaction (hors eau) ramenée à la masse totale injectée dans l'étape de torréfaction (hors eau).

On entend par torréfaction, un procédé de traitement thermique à une température comprise entre 200 et 350°C, et réalisé généralement dans une atmosphère appauvrie en oxygène.

On entend par gazéification, une étape mettant en oeuvre une réaction d'oxydation partielle qui convertit la charge en gaz de synthèse comprenant majoritairement du monoxyde de carbone et du dihydrogène.

On entend par co-broyage, le broyage de la charge biomasse en présence de la charge fossile solide.

On entend par ratio, rapport massique, le rapport entre la masse du constituant considéré par rapport à la masse total de la charge.

On entend par taille caractéristique, la mesure de la longueur d'une particule selon sa plus grande dimension.

On entend par anisotrope des propriétés variables de résistance de la matière selon l'orientation de l'effort auquel elle est soumise.

On en par taux d'humidité, le rapport entre la masse d'eau contenant dans une charge et la masse totale de ladite charge.

### DESCRIPTION DETAILLEE DE L'INVENTION

Dans le sens de la présente invention, les différents modes de réalisation présentés dans l'ensemble de la description peuvent être utilisés seuls ou en combinaison les uns avec les autres, sans limitation de combinaison.

### La Charge

Conformément à l'invention, la charge du procédé comprend de la biomasse seule ou en mélange. La quantité d'eau contenue dans la charge brute est comprise entre 0,0 et 70,0 % massique, de préférence comprise entre 5,0 et 70,0%, de préférence entre 10,0 et 70,0%.

La biomasse est choisie parmi, tout type de biomasse, de préférence de la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.

De préférence, la biomasse est de la biomasse lignocellulosique. Elle comprend essentiellement trois constituants naturels présents en quantités variables selon son origine : la cellulose, l'hémicellulose et la lignine.

La charge biomasse lignocellulosique est de préférence utilisée sous sa forme brute, c'est-à-dire dans l'intégralité de ces trois constituants cellulose, hémicellulose et lignine.

Dans un mode de réalisation préféré de l'invention, la biomasse lignocellulosique est choisie parmi la biomasse herbeuse, les résidus d'exploitation agricole tel que les déchets de paille, rafles de maïs, la bagasse de canne à sucre, les résidus d'exploitation forestière ou de scieries tel que les copeaux de bois ou tout autre type de résidus ligneux.

Dans une mode de réalisation préféré de l'invention, ladite charge (1) peut éventuellement subir une étape i) de prétraitement préalablement à son introduction dans l'étape a) du procédé selon l'invention. L'objectif de l'étape i) de prétraitement est de permettre l'injection de la charge prétraitée (2) dans l'étape a) de séchage.

L'étape i) de prétraitement est fonction du type de charge considérée. De préférence l'étape i) de prétraitement est une étape de broyage primaire de ladite charge permettant de réduire sa granulométrie à une taille caractéristique comprise entre 10 et 50 mm. Ladite étape i) de broyage primaire est avantageusement mise en oeuvre selon une technique connue de l'homme du métier. L'étape i) de prétraitement peut également avantageusement comporter une mise en forme de la charge telle que par exemple par pelletisation, compression ou toute autre technique connue de l'homme du métier en vue de faciliter son transport, son stockage, et son traitement ultérieur dans l'étape a) de séchage du procédé selon l'invention.

### Etape a) de séchage

Conformément à l'invention, le procédé comprend une étape a) de séchage de la charge (1), éventuellement prétraitée (2), ladite étape a) de séchage est mise en oeuvre par la mise en contact de la charge avec un flux de gaz chaud qui se refroidit. Le flux de gaz chaud entre à ladite étape à une température comprise entre 50 et 500°C, de préférence entre 100 et 450°C et préférentiellement entre 150 et 350 °C, et pendant une durée comprise entre 5 et 180 minutes, de préférence entre 10 et 100 minutes et préférentiellement entre 15 et 60 minutes et fourni la charge séchée (3) et éventuellement prétraitée. Le solide séché sort de ladite étape à une température comprise entre 40 et 120°C, de préférence entre 50 et 90°C, encore plus préférentiellement entre 60 et 80°C.

Le but du séchage est d'éliminer l'eau contenue dans la charge. Conformément à l'invention, la quantité d'eau résiduelle en sortie de l'étape a) de séchage est comprise entre 0,0 % et 5,0 % massique par rapport à la masse totale de la charge.

L'énergie nécessaire au séchage est généralement apportée par la mise en contact de la charge avec un flux de gaz chauds.

Le flux de gaz chauds utilisé dans l'étape de séchage peut avantageusement provenir de la combustion d'un intrant au procédé et de préférence de la combustion du gaz naturel et/ou de la combustion d'un flux gazeux issus d'une autre étape du procédé.

Par exemple, la combustion des gaz issus de l'étape b) de torréfaction produit un flux de gaz chaud utilisable pour sécher la charge pour toute méthode connue de l'homme du métier.

L'effluent gazeux issu de l'étape a) contenant de l'eau peut être utilisé pour préchauffer l'air permettant la combustion du gaz naturel et/ou du flux gazeux produit lors de la torréfaction.

Dans un mode réalisation particulier, ladite charge (1) introduite à l'étape a) est constituée de biomasse tel que définie précédemment.

### Etape b) de torréfaction

Conformément à l'invention, la charge séchée (3) issue de l'étape a) est envoyée dans une étape b) de torréfaction pour produire au moins un effluent solide de biomasse torréfiée (4).

La torréfaction est un processus de décomposition thermique douce dans une gamme de température comprise entre 200 et 350°C. Ce processus est généralement caractérisé par de faibles vitesses de montée en température (< 50°C/min) et de longs temps de séjour (entre 20 min et 60 min).

Conformément à l'invention, l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,1 et 15 bar, de manière préférée entre 0,1 et 10 bar et de manière plus préférée entre 0,5 et 1,5 bar (1bar = 0,1 MPa). L'opération de torréfaction est réalisée dans un environnement dont la teneur en oxygène est inférieur à 10 % volume, de préférence, est comprise entre 0 et 10 % volume, de préférence entre 0 et 8 % volume et préférentiellement entre 0 et 3 % volume.

Autour de 200°C, les hémicelluloses, qui sont les composés les plus réactifs de la biomasse lignocellulosique, commencent à subir des réactions de dévolatilisation et de carbonisation. A ce niveau de température, la cellulose et la lignine ne sont, pour leur part, que peu transformées. Les produits de décomposition de la biomasse lignocellulosique sont générés sous forme de gaz condensables (principalement eau, acide formique, acide acétique et autres composés organiques) et d'incondensables (principalement CO et CO₂).

La torréfaction modifie la structure de la biomasse lignocellulosique et donc ses propriétés. En particulier l'opération de torréfaction rend la biomasse plus fragile et atténue son caractère fortement anisotrope. Il est bien connu de l'homme de l'art que le bois par exemple de par sa nature fibreuse aura une résistance élastique à l'étirement bien plus importante si elle est appliquée dans le sens des fibres que si elle est appliquée transversalement à celles-ci. Ainsi en comparaison avec une poudre de biomasse brute d'une granulométrie moyenne donnée, l'obtention d'une poudre équivalente à partir de la même biomasse ayant subi une étape de torréfaction, nécessitera une énergie de broyage bien plus faible (effet lié à la fragilité de la matière) et la forme finale des particules solides obtenues se rapproche de particules sphériques (effet lié au caractère moins anisotrope) ce qui facilite le broyage ultérieur.

Ladite étape b) de torréfaction peut avantageusement être mise en oeuvre dans un dispositif de type four rotatif, four tournant, four à vis, four à lits mobiles et fours à lits fluidisés.

Conformément à l'invention, l'étape b) de torréfaction produit un effluent solide appelé biomasse torréfiée (4).

Ladite étape b) de torréfaction permet également la production d'un effluent gazeux combustible (11), appelé gaz de torréfaction, dont la quantité représente de préférence de 5 à 40 % de la masse de biomasse séchée issue de l'étape a) initiale selon les conditions opératoires et de façon plus préférée de 10 à 35%.

Un des paramètres clés de l'étape de torréfaction est la perte de masse anhydre (exprimée en pourcentage massique) définie comme le pourcentage de perte de masse entre biomasse initiale sèche et biomasse torréfiée sèche. Plus cette perte est élevée, plus le rendement massique solide est faible, plus la quantité de gaz de torréfaction générée est grande. Il est connu que le pouvoir calorifique inférieur (PCI) de ce gaz est également fonction du pourcentage de perte de masse anhydre (le PCI est une fonction croissante de ce pourcentage pour une charge donnée).

Selon l'invention, le choix d'un pourcentage suffisamment élevé de perte de masse anhydre lors de l'étape de torréfaction permet de limiter la consommation d'un combustible entrant dans le procédé notamment lors du séchage. Ainsi il limite l'utilisation de combustible d'origine fossile par la valorisation des gaz de torréfaction générés à l'étape de torréfaction.

Dans un mode de réalisation préféré, le pourcentage de perte anhydre est choisi de manière à ce que la chaleur dégagée par la combustion des gaz de torréfaction (de manière interne ou externe en postcombustion) permette d'apporter l'énergie nécessaire au moins à une étape de séchage. De préférence, la perte de masse anhydre est comprise entre 1,0 et 40,0% massique, de préférence entre 5,0 et 35,0 % massique, et préférentiellement entre 15,0 et 30,0 % massique, par rapport à la masse totale de la charge (3) introduite à l'étape b) de torréfaction.

Dans un mode de réalisation du procédé, les gaz de torréfaction (11) sont envoyés dans une étape ii) de combustion dans laquelle ils sont brulés pour produire, un flux de gaz chauds (12) dans une chambre de combustion en présence d'air et éventuellement de gaz naturel pouvant être envoyé vers les étapes a) et/ou d) de séchage, ou un flux de gaz chaud (13) pouvant être renvoyé dans l'étape b) de torréfaction. L'étape ii) de combustion peut avantageusement être intégrée à l'étape b) de torréfaction ou pas.

Dans un mode de réalisation, l'énergie produite lors de l'étape ii) de combustion des gaz de torréfaction (11) issus de l'étape b) est utilisée pour apporter l'énergie nécessaire à au moins une étape du procédé, de préférence à l'étape a) de séchage et de préférence également à l'étape d) de séchage final par l'intermédiaire du flux (12) ou à l'étape b) de torréfaction par l'intermédiaire du flux (13).

L'énergie thermique issue de l'étape ii) de combustion est envoyée aux étapes a), b) et/ou d) par des moyens connus de l'homme du métier.

Une partie du flux de gaz chaud (12) issu de l'étape ii) de combustion peut avantageusement être envoyée dans une étape d'échange thermique permettant de préchauffer l'air utilisé dans l'étape a) de séchage et dans l'étape de séchage final d).

Dans un mode de réalisation, une partie du flux de gaz chauds (13) issus de l'étape ii) de combustion est directement injectée dans l'étape b) de torréfaction de manière à apporter par échange thermique gaz/solide, l'énergie nécessaire à la transformation de la charge biomasse.

Si le flux de gaz de torréfaction combustible issu de l'étape b) n'est pas suffisant, un appoint de combustible et de préférence de gaz naturel peut avantageusement être introduit dans l'étape ii) de combustion de manière à obtenir l'énergie nécessaire aux différents étapes consommatrices d'énergie thermique.

A l'issue de l'étape b) de torréfaction, l'effluent solide biomasse torréfiée (4) obtenu à un taux d'humidité compris entre 0,0 et 5,0 % massique, et de préférence entre 0,0 et 3,0 % massique. Par solide biomasse torréfiée, on entend un solide obtenu par torréfaction de la biomasse.

L'effluent solide biomasse torréfiée (4) obtenu à l'issue de l'étape b) peut éventuellement être stocké dans une étape optionnelle de stockage avant son introduction dans l'étape c) de co-broyage du procédé selon l'invention. Ladite étape de stockage peut avantageusement être réalisée selon des méthodes connues de l'homme du métier. De préférence, la biomasse solide torréfiée peut être stockée dans des capacités à vis planétaires, dans des silos, ou sous hangar dans des cellules ouvertes adaptées.

Dans le cas avantageux où l'étape c) de co-broyage est mise en oeuvre de manière séquentielle, une étape de stockage permet de continuer à opérer l'étape b) de torréfaction et l'étape ii) optionnelle de combustion afin de continuer à produire le flux de gaz chaud (12) nécessaire aux étapes a) de séchage et d) de séchage final.

### Etape c) de co-broyage

Conformément à l'invention, le procédé comprend une étape c) de co-broyage de l'effluent solide biomasse torréfiée (4) issu de l'étape b), et ayant éventuellement été stocké dans une étape optionnelle de stockage, en présence d'au moins une charge fossile solide (9) pour obtenir un effluent broyé (5), encore appelé poudre broyée (5). Ladite étape c) de co-broyage est mise en oeuvre à une température comprise entre 0°C et 150°C et préférentiellement entre 20°C et 100°C et encore préférentiellement entre 50°C et 90°C.La charge fossile solide (9) et l'effluent solide biomasse torréfiée (4) sont broyées simultanément dans un unique et même broyeur.

L'objectif de l'étape c) de co-broyage est de réduire la granulométrie des deux charges (4) et (9) introduites dans ladite étape c), tout en assurant une forme de particule propice à leur transport et leur utilisation ultérieurs, et de préférence à leur injection dans une étape de gazéification. Les particules de l'effluent (5) en sortie de ladite étape c) de co-broyage ont une taille caractéristique comprise entre 50 et 500 microns, de préférence 70 et 200 microns et de préférence entre 80 et 150 microns.

Ladite charge fossile solide (9) introduite dans l'étape c) de co-broyage est de préférence choisie parmi les hydrocarbures fossiles solides tels que du charbon, du coke de pétrole (petcoke selon la terminologie anglo-saxonne), des résidus pétroliers, des sables bitumineux ou leurs dérivés et des schistes bitumineux ou leurs dérivés.

De préférence les dimensions de la charge fossile solide introduite à l'étape c) de co-broyage sont comprises entre 1,0 et 100 millimètres, de préférence entre 2,0 et 80 millimètres, de préférence entre 3,0 et 70 millimètres, de préférence entre 4,0 et 60 millimètres et préférentiellement entre 5,0 et 50 millimètres.

Dans un mode de réalisation particulier, la charge fossile peut présenter des dimensions comprises entre 30 et 100 millimètres, de préférence entre 35 et 90 millimètres, de préférence entre 40 et 80 millimètres et de manière préférée entre 45 et 70 millimètres.

Dans un autre mode de réalisation particulier, la charge fossile peut présenter des dimensions comprises entre 1,0 et 60 millimètres, de préférence entre 2,0 et 50 millimètres, de préférence entre 3,0 et 40 millimètres et de manière préférée entre 4,0 et 30 millimètres.

De préférence, la charge fossile solide (9) peut subir une étape de concassage optionnelle afin de réduire les dimensions de ladite charge et de permettre son introduction dans l'étape c) de co-broyage.

La charge fossile solide (9) peut avantageusement subir une étape iii) de séchage préliminaire dépendant de son taux initial d'humidité avant d'être introduite dans ladite étape c) de co-broyage. L'étape iii) de séchage préliminaire permet d'obtenir une charge fossile pré séchée (10) et de la rendre compatible avec son injection dans l'étape c) de co-broyage.

De préférence, le taux d'humidité de la charge fossile (9) ou (10), entrant dans l'étape c) de co-broyage doit être compris entre 3,1 et 30,0 % massique, préférentiellement entre 4,0 et 25,0 % massique et de manière très préféré compris entre 5,0 et 20,0 % massique.

De préférence, l'effluent solide biomasse torréfiée (4) et la charge fossile solide (9) ou (10) sont introduites dans ladite étape c) de co-broyage de sorte que le pourcentage massique entre l'effluent solide biomasse torréfiée dans la charge totale solide alimentant l'étape c) de co-broyage est compris entre 1 et 99 % massique, de préférence entre 50 et 98 % massique, de préférence entre 40 et 95% massique. On entend par charge totale solide la somme de l'effluent solide de biomasse torréfiée (4) et de la charge fossile (9) ou (10).

De préférence, l'étape de co-broyage peut être mise en oeuvre en présence d'un composé additionnel utile pour l'étape ultérieure de gazéification, ledit composé est choisi parmi des cendres vitrifiées, du sable, du calcaire, de la chaux ou d'autres composés connus de l'Homme du métier pris seul ou en mélange.

De préférence, le broyeur est choisi de manière à optimiser le transport pneumatique de la poudre (5) obtenue à l'issue de l'étape c), en minimisant la vitesse minimale de fluidisation (UMF), ainsi que sa propre consommation énergétique.

De préférence, ladite étape c) de co-broyage est mise en oeuvre dans un broyeur de type « roller mill », « universel », « attrition », ou tout autre type de broyeurs connus de l'homme du métier

De façon surprenante, la demanderesse a constaté que le co-broyage de l'effluent solide biomasse torréfiée (4) et la charge fossile solide (9) ou (10) entraîne en plus du broyage de la charge fossile solide (9) ou (10), le séchage particulièrement efficace de ladite charge (9) ou (10). En effet, le broyage est une étape très exothermique. De plus, la mise en oeuvre telle que décrite selon l'invention permet un mélange intime des deux types de charges. Ainsi, le co-broyage d'une charge peu humide, telle que l'effluent solide biomasse torréfiée avec une charge humide, telle que la charge fossile solide permet un transfert de la chaleur générée par le broyage de la biomasse vers l'eau contenue dans la charge humide fossile solide et optimise ainsi le séchage de cette dernière. Ce séchage simultané permet avantageusement de simplifier le nombre d'étapes du procédé ainsi que de limiter sa consommation énergétique.

### Etape d) de séchage final

Le procédé selon l'invention comprend une étape d) de séchage finale simultanément à l'étape c). Cette étape de séchage finale d) est mise en oeuvre par la mise en contact de la charge avec un flux de gaz. Ledit flux de gaz entre à ladite étape à une température comprise entre 50 et 150°C, de préférence entre 70 et 120°C pour produire une poudre séchée (6).

L'objectif de l'étape d) de séchage final est de diminuer le taux d'humidité de la poudre (5) issue de l'étape c) à un taux acceptable pour son injection dans une étape de traitement ultérieur et de préférence dans une étape de gazéification. De préférence, l'étape optionnelle d) de séchage final permet d'abaisser le taux d'humidité de la poudre obtenue à l'issue de l'étape c) au-dessous de 3,0 % massique, de préférence entre 1,0 et 3,0 % massique.

L'étape d) de séchage finale est réalisée simultanément à l'étape de co-broyage c).

L'énergie thermique nécessaire pour ce séchage est apportée soit par combustion d'un flux entrant dans le procédé (gaz naturel par exemple), soit préférentiellement par intégration énergétique par l'intermédiaire d'un échange de chaleur préchauffant l'air de séchage en utilisant un effluent chaud (12) de l'étape ii) de combustion. Selon l'invention, le choix d'un pourcentage suffisamment élevé de perte de masse anhydre de l'étape b) de torréfaction permet de limiter l'utilisation d'un combustible entrant dans le procédé en étape d); en particulier, il limite l'utilisation de combustible d'origine fossile.

### Etape optionnelle e) de stockage

Le procédé selon l'invention peut avantageusement comprendre une ou plusieurs étapes e) de stockage de l'effluent issu de l'une quelconque des étapes du procédé, de préférence de l'étape a), b), c), ou d). De préférence, l'effluent issu de l'étape c) ou d) est stocké pour produire un effluent stocké (7) encore appelé poudre stockée (7).

Le stockage permet de conserver un volume tampon de charge. Ce volume est nécessaire pour conserver l'opérabilité de la section en aval en cas d'arrêt de la section amont.

L'étape e) de stockage est composée préférentiellement de silos de volumes utiles suffisants pour assurer l'approvisionnement de la section en aval. Par exemple, le volume de ces silos doit assurer un approvisionnement de 24 à 48 heures de la section avale.

L'étape e) de stockage peut également inclure une section de mise en pression via différentes capacités successives fonctionnant de manière séquentielles afin d'augmenter la pression de stockage de la charge jusqu'à une pression compatible avec son injection dans une étape ultérieure et de préférence dans une étape de gazéification.

### Etape optionnelle f) de transport

L'effluent (5) issu de l'étape c) ou l'effluent (6) issu de l'étape d) ou l'effluent (7) issu de l'étape e) de stockage peut avantageusement subir une étape e) de transport. L'effluent ainsi transporté est appelé effluent transporté (8) ou encore poudre transportée (8). L'étape f) de transport permet de convoyer l'effluent (5), (6) ou (7), de préférence formulé et présentant la composition souhaitée, vers une étape ultérieure et de préférence vers une étape g) de gazéification.

De préférence, l'étape f) de transport est mise en oeuvre selon la technologie du transport pneumatique.

Le gaz vecteur utilisé dans l'étape f) de transfert par transport pneumatique est préférentiellement de l'azote, du CO₂ ou tout autre gaz inerte permettant d'éviter la formation d'une zone à atmosphère explosive (ATEX poudres) et compatible avec l'étape ultérieure située en aval et de préférence avec l'étape f) de gazéification.

Le débit du gaz vecteur est calculé selon des méthodes connues de l'homme du métier afin d'obtenir à la fois le débit et la densité de transport voulus. Les paramètres de l'étape b) de torréfaction et de l'étape c) de co-broyage sont sélectionnés de manière à optimiser la qualité de ce transport (UMF optimisé en accord avec les consommations énergétiques de ces sections).

### Etape optionnelle g) de gazéification

La poudre issue de l'étape c), d) ou d'une étape e) de stockage est transportée à l'étape f), de préférence formulée et présentant la composition souhaitée, peut avantageusement être envoyée dans une étape ultérieure g) de gazéification.

Ladite étape g) de gazéification met en oeuvre une réaction d'oxydation partielle qui convertit la charge en un gaz de synthèse comprenant majoritairement du monoxyde de carbone et de l'hydrogène. L'étape g) de gazéification s'opère avantageusement en présence d'une quantité maitrisée d'oxygène sous la forme d'un flux dont le débit est contrôlé et contenant au moins 90% volume d'oxygène, de préférence au moins 96% volume d'oxygène.

L'étape g) de gazéification de l'effluent (8) est avantageusement réalisée selon les méthodes connues de l'homme du métier.

De préférence, elle est réalisée dans un gazéifieur de type plasma, lit fixe, ou lit fluidisé ou de façon préférée dans un gazéifieur à flux entrainé à paroi refroidie à haute température, c'est-à-dire à une température comprise entre 800 et 1800°C, de préférence entre 1000 et 1600°C et plus préférentiellement entre 1200 et 1500°C et à une pression absolue avantageusement comprise entre 2 et 12 MPa, de préférence entre 2,5 et 6 MPa, et plus préférentiellement entre 3 et 5 MPa. La haute température permet d'obtenir un taux de conversion du carbone élevé et donc de réduire la quantité de carbone non converti dans les cendres produites et ainsi de réduire la quantité de cendres recyclées vers le gazéifieur.

Dans un mode particulier de l'invention, le procédé comprend les étapes a), b), et c), ou les étapes a), b), c) et d), ou les étapes a), b), c), d), et e), ou les étapes a), b), c), d), e) et f), ou les étapes a), b), c), d), e), f) et g).

Dans un mode particulier de l'invention, le procédé est constitué des étapes a), b), et c), ou les étapes a), b), c) et d), ou les étapes a), b), c), d), et e), ou les étapes a), b), c), d), e) et f), ou les étapes a), b), c), d), e), f) et g).

### DESCRIPTION DES FIGURES

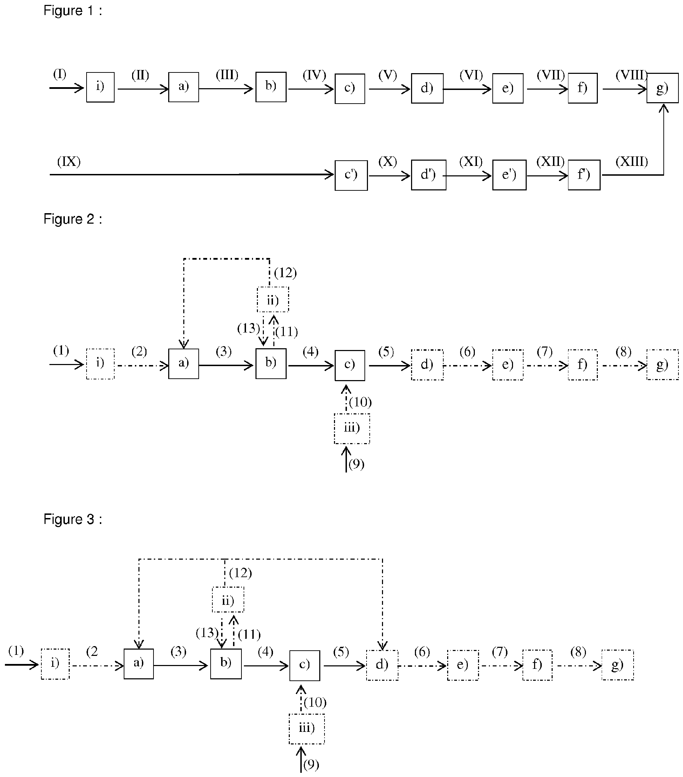

La figure 1 représente le schéma général du procédé de l'art antérieur mise en oeuvre dans l'exemple 1. Les traitements de la biomasse et de la charge fossile solide sont réalisés indépendamment jusqu'à leurs injections dans une éventuelle étape g) de gazéification.
   La charge biomasse **(I)** peut subir une étape **i)** de prétraitement préalablement à son introduction dans l'étape **a).** La charge biomasse prétraitée **(II)** ou la charge biomasse **(I)** est séchée durant l'étape **a)** pour produire une charge biomasse séchée **(III)**, encore appelé effluent **(III).** Ledit effluent **(III)** issu de l'étape **a)** est ensuite torréfié dans une étape **b)**. L'étape **b)** de torréfaction produit un effluent solide appelé biomasse torréfiée **(IV)**. L'effluent solide biomasse torréfiée **(IV)** issu de l'étape **b)**, est ensuite broyé dans l'étape **c)**. La poudre **(V)** issu de l'étape **c)** de broyage peut être éventuellement séchée lors de l'étape **d)** de séchage finale. La poudre **(V)** issue de l'étape **c)** ou la poudre séchée **(VI)** issue de l'étape **d)** peut être soumise à une étape **e)** de stockage. La poudre stockée **(VII)** ou la poudre broyée **(V)** ou la poudre séchée **(VI)** peut être engagée dans une étape **f)** de transport. La poudre **(VIII)** ainsi transportée peut être engagée dans une étape **g)** de gazéification.
   La charge fossile solide **(IX)** est broyée dans l'étape **c').** La poudre **(X)** issu de l'étape **c')** de broyage est séchée lors de l'étape **d')** de séchage finale pour produire une poudre **(XI)** séchée. Ladite poudre **(XI)** issue de l'étape **c')** est soumise à une étape **e')** de stockage. La poudre stockée **(XII)** ou la poudre séchée **(XI)** ou la poudre broyée **(X)** est engagée dans une étape **f')** de transport. La poudre **(XIII)** ainsi transportée peut être engagée dans une étape **g)** de gazéification.
La figure 2 représente le schéma générale du procédé selon l'invention mise en oeuvre dans l'exemple 2. La charge biomasse **(1)** peut subir une étape **i)** de prétraitement préalablement à son introduction dans l'étape **a).** La charge biomasse prétraitée **(2)** ou la charge biomasse **(1)** est séchée durant l'étape **a)** pour produire une charge biomasse séchée **(3),** encore appelé effluent **(3).** Ledit effluent **(3)** issu de l'étape **a)** est ensuite torréfié dans une étape **b).** L'étape **b)** de torréfaction produit un effluent solide appelée biomasse torréfiée **(4).** L'effluent solide biomasse torréfiée **(4)** issu de l'étape **b)**, est ensuite co-broyé dans l'étape c) en présence d'au moins une charge fossile solide **(9)** pour obtenir une poudre. Avant son introduction dans l'étape **c)** de co-broyage, la charge fossile solide **(9)** peut subir une étape **iii)** de séchage préliminaire permettant d'obtenir une charge fossile préalablement séchée **(10).** La poudre **(5)** issue de l'étape **c)** de co-broyage est séchéelors de l'étape **d)** de séchage finale opérée simultanément au co-broyage c). La poudre co-broyée **(5)** issue de l'étape **c)** et de l'étape **d)** simultanée peut être soumise à une étape **e)** de stockage. La poudre stockée **(7)** ou la poudre broyée **et** séchée **(6)** peut être engagée dans une étape **f)** de transport. La poudre **(8)** ainsi transportée peut être engagée dans une étape **g)** de gazéification. Les gaz de torréfaction **(11)** issus de l'étape **b)** de torréfaction sont envoyés dans une étape **ii)** de combustion dans laquelle ils sont brulés pour produire un flux de gaz chauds **(12)** qui permettent le chauffage directe de l'étape **a)** de séchage ou indirecte par l'intermédiaire d'un échangeur thermique. Les gaz issus de l'étape **ii)** de combustion sont également brulés pour produire un flux de gaz chauds **(13)** envoyé dans l'étape **b)** de torréfaction.
La figure 3 représente le schéma général du procédé selon l'invention mise en oeuvre dans l'exemple 3. Ledit procédé est une variante du procédé mis en oeuvre dans l'exemple 2 comprenant en outre une intégration énergétique vers l'étape d) de séchage finale. Dans cette variante, le flux de gaz chauds **(12)** permet le chauffage directe de l'étape **d)** de séchage finale ou indirecte par l'intermédiaire d'un échangeur thermique.

Les exemples ci-dessous illustrent l'invention sans en limiter la portée.

### EXEMPLES

### Exemple 1 : procédé sans co-broyage (selon l'art antérieur)

Le schéma du procédé de l'art antérieur selon l'exemple 1 est représenté dans la figure 1.

Selon cet exemple, le procédé permet de traiter deux charges sur deux chaînes de préparation distinctes :
- Une charge A de type biomasse lignocellulosique sous forme de copeaux de bois de chêne de taille caractéristique 20 à 30mm. L'humidité de cette charge est de 30% massique.
- Une charge B de type fossile (charbon), sous forme de particules de taille caractéristique comprise entre 5 et 50 mm.

Ce procédé ne comporte pas d'étape de co-broyage, ni d'intégration énergétique entre les étapes de traitement des charges A et B.

Le procédé de traitement de la charge A comporte une étape d'intégration énergétique de l'étape b) de torréfaction vers l'étape a) de séchage de la biomasse.

L'objectif de ce procédé est de préparer 1 tonne de charge par heure pour le procédé en aval, ici une gazéification. La charge produite doit être composée de 75% de biomasse DAF (Dry and Ash Free : considérée sèche et sans cendre) et 25% de charge fossile DAF.

### Description de la chaîne de préparation de la charge A :

La charge A est envoyée dans une étape de séchage permettant de diminuer à 3% massique l'humidité de la charge. La température du solide en sortie de l'étape de séchage est de 70°C. Les copeaux séchés sont convoyés dans une étape de torréfaction opérant à une température moyenne de 300°C. La perte de masse anhydre au cours de l'étape de torréfaction est de 27%. L'humidité résiduelle des copeaux sortie de cette étape et considérée nulle.

Les copeaux séchés et torréfiés sont envoyés dans une étape de broyage dont la technologie est connue de l'homme du métier, par exemple de type broyeur pendulaire à rouleaux (Roller mill). Cette étape permet de réduire la taille des particules majoritairement (90% des particules) en deçà de 90 microns. La technique utilisée pour la caractérisation de la taille des particules utilise des tamis selon la norme NF EN 933.

Selon cet exemple, il n'y a pas d'étape dite de séchage final, la charge A sous forme de poudre séchée et torréfiée est envoyée via un transport pneumatique en phase diluée dans une étape de stockage puis dans une étape de transport pneumatique permettant de l'injecter dans le procédé aval de gazéification. Le transport pneumatique est ici effectué en phase dense. L'étape de transport pneumatique en phase dense est réalisée avec de l'azote comme gaz vecteur inerte.

### Description de la chaîne de préparation de la charge B :

La charge B est convoyée directement dans une étape de broyage de technologie connue de l'homme du métier, par exemple de type broyeur pendulaire à rouleaux (a écrasement encore appelé roller mill, selon la terminologie anglo-saxonne). Cette étape permet de réduire la taille des particules majoritairement (90% des particules) en deçà de 90 microns. La technique utilisée pour la caractérisation de la taille des particules utilise des tamis selon la norme NF EN 933. De manière concomitante à l'étape de broyage, la charge subi une étape de séchage finale permettant de ramener son humidité à 3% massique. Cette étape de séchage finale est mise en oeuvre via l'utilisation d'un bruleur de gaz naturel réchauffant un flux de gaz qui est mis en contact direct avec la charge en cours de broyage afin de la sécher.

La charge B sous forme de poudre séchée est envoyée via un transport pneumatique en phase diluée dans une étape de stockage puis dans une étape de transport pneumatique permettant de l'injecter dans le procédé aval de gazéification. Le transport pneumatique est ici effectué en phase dense. L'étape de transport pneumatique en phase dense est réalisée avec de l'azote comme gaz vecteur inerte.

Le tableau ci-dessous donne les consommations d'utilités de ce schéma :

| | Utilités & production | | |
|---|---|---|---|
| | Charge biomasse DAF | t/h | 1,02 |
| | Charge fossile DAF | t/h | 0,25 |
| | Charge produite | t/h | 1,00 |
| Ensemble des étapes | Electricité consommée | MJ/h | 127 |
| Etapes d) et d') | Gaz naturel consommé | MJ/h | 130 |
| Etapes e), f), e') et f') | Azote consommé | Nm³/h | 313 |

L'électricité consommée inclut l'électricité nécessaire au broyage dans le broyeur pendulaire.

Le gaz naturel consommé correspond aux séchages primaire et final.

L'azote correspond aux besoins de transport pneumatique et d'aération dans les silos.

### Exemple 2 : procédé avec co-broyage sans intégration énergétique vers l'étape (selon l'invention)

Le schéma du procédé selon l'invention mis en oeuvre à l'exemple 2 est représenté dans la figure 2.

Selon cet exemple, le procédé permet de traiter deux charges :
- Une charge A de type biomasse lignocellulosique sous forme de copeaux de bois de chêne de de taille caractéristique 20 à 30mm. L'humidité de cette charge est de 30% massique.
- Une charge B de type fossile (charbon), sous forme de particules de taille caractéristique comprise entre 10 et 30 mm.

Ce procédé comporte une étape de co-broyage entre la chaîne de préparation de la charge A et celle de la charge B et ne comporte pas d'intégration énergétique vers l'étape d) de séchage. Les étapes de co-broyage et le séchage final sont réalisées simultanément.

La chaleur issue de la combustion des gaz de torréfaction est utilisée dans l'étape b) de torréfaction ainsi que pour l'étape a) de séchage.

L'objectif de ce procédé est de préparer 1 tonne de charge par heure pour le procédé en aval de gazéification. La charge produite doit être composée de 75% de biomasse DAF (Dry and Ash Free : considérée sèche et sans cendre) et 25% de charge fossile DAF.

### Description de la chaîne de préparation de la charge mélangée :

La charge A est envoyée dans une étape de séchage permettant de diminuer à 3% massique l'humidité de la charge. La température du solide en sortie de l'étape de séchage est de 70°C. Les copeaux séchés sont convoyés dans une étape de torréfaction opérant à une température moyenne de 300°C. La perte de masse anhydre au cours de l'étape de torréfaction est de 27%. L'humidité résiduelle des copeaux est négligeable en sortie de cette étape et considérée nulle.

Les copeaux séchés et torréfiés sont envoyés dans une étape de co-broyage dont la technologie est connue de l'homme du métier, par exemple de type broyeur pendulaire à rouleaux. La charge B est convoyée directement dans ce même broyeur. Cette étape permet de réduire la taille des particules majoritairement (90% des particules) en deçà de 90microns. La technique utilisée pour la caractérisation de la taille des particules utilise des tamis selon la norme NF EN 933.

Selon cet exemple, le mélange de charges subit une étape de séchage d) concomitante à l'étape de broyage. Un effet inattendu de ce broyage-séchage en mélange est de diminuer l'énergie nécessaire au séchage de la charge B. En effet, le broyage de la charge A est exothermique et produit une chaleur utilisée pour le séchage de la charge B. Ladite chaleur générée par le broyage de A permet de diminuer de façon notable l'énergie consommée pour le séchage. Cet effet est sensible sur la consommation de gaz naturel du brûleur permettant de monter la température de l'atmosphère du broyeur. Le mélange de charges A et B sous forme de poudre séchée issu du broyage est envoyé via un transport pneumatique en phase diluée dans une étape de stockage puis dans une étape de transport pneumatique permettant de l'injecter dans le procédé aval de gazéification. Le transport pneumatique est ici effectué en phase dense. L'étape de transport pneumatique en phase dense est ici réalisée avec un gaz vecteur inerte, le gaz étant de l'azote dans cet exemple.

Le tableau ci-dessous donne les consommations d'utilités de ce schéma :

| | Utilités & production | | |
|---|---|---|---|
| | Charge biomasse DAF | t/h | 1,02 |
| | Charge fossile DAF | t/h | 0,25 |
| | Charge produite | t/h | 1,00 |
| Ensemble des étapes | Electricité consommée | MJ/h | 126 |
| Etapes d) | Gaz naturel consommé (PCI) | MJ/h | 109 |
| Etapes e) et f) | Azote consommée | Nm3/h | 338 |

L'électricité consommée inclut l'électricité nécessaire au broyage dans le broyeur pendulaire.

Le gaz naturel consommé correspond à l'étape d) de séchage final.

L'azote correspond aux besoins de transport pneumatique et d'aération dans les silos.

### Exemple 3 : procédé avec co-broyage avec intégration énergétique vers l'étape d) de séchage finale (selon l'invention)

Le schéma du procédé selon l'invention mis en oeuvre à l'exemple 3 est représenté dans la figure 3.

Ce procédé comporte une étape de co-broyage entre la chaîne de préparation de la charge A et celle de la charge B et permet donc de traiter les deux charges sur une seule et unique chaîne de préparation. De plus ce procédé comporte une intégration énergétique vers l'étape d) de séchage final.

Les étapes de co-broyage et de séchage final sont réalisées simultanément.

Les caractéristiques des charges A et B mises en oeuvre dans ce procédé sont identiques à celles des charges A et B mises en oeuvre dans l'exemple 2.

La chaleur issue de la combustion des gaz de torréfaction est utilisée dans l'étape b) de torréfaction ainsi que pour l'étape a) de séchage.

L'avantage du procédé mis en oeuvre dans cet exemple est une intégration énergétique de l'étape de torréfaction vers l'étape de séchage final de la poudre du mélange de charge. Dans ce cas, la perte de masse anhydre est de 28% environ et permet avantageusement de produire la chaleur nécessaire audit séchage final.

L'intégration énergétique ou encore appelée intégration thermique est ici réalisée de manière indirecte, par l'intermédiaire de l'utilisation d'un échangeur de chaleur.

Le tableau ci-dessous donne les consommations d'utilités de ce schéma :

| | Utilités & production | | |
|---|---|---|---|
| | Charge biomasse DAF | t/h | 1,04 |
| | Charge fossile DAF | t/h | 0,25 |
| | Charge entrante | t/h | 1,00 |
| Ensemble des étapes | Electricité consommée | MJ/h | 127 |
| Etape d) | Gaz naturel consommé (PCI) | MJ/h | 0 |
| Etapes e) et f) | Azote consommée | Nm3/h | 340 |

L'électricité consommée inclut l'électricité nécessaire au broyage dans le broyeur pendulaire.

Le gaz naturel consommé correspond à l'étape d) de séchage final.

L'azote correspond aux besoins de transport pneumatique et d'aération dans les silos.

Ces exemples montrent clairement que le co-broyage (exemple 2) des charges A et B permet de diminuer significativement la consommation de gaz naturel, de 130 (exemple 1) à 109 Mj/h. En outre, l'intégration énergétique vers l'étape d) de séchage finale (exemple 3) permet d'être autotherme, c'est-à-dire sans besoin d'apport énergétique externe. Le débit de charge entrant dans le procédé est alors 1.04 t/h pour une production de 1.0 t/h. La perte de masse anhydre correspondant permet ainsi de générer la chaleur nécessaire à l'intégration thermique de la torréfaction avec le séchage final de la charge.

## Revendications

1. Procédé de traitement d'une charge comprenant de la biomasse solide, ledit procédé comprenant au moins les étapes suivantes :
a) Une étape de séchage de ladite charge à une température comprise entre 20 et 180°C, pendant une durée comprise entre 5 et 180 minutes,
b) Une étape de torréfaction de la charge séchée issue de l'étape a) pour produire au moins un effluent solide biomasse torréfiée, et
c) Une étape de co-broyage de l'effluent solide biomasse torréfiée issu de l'étape b) en présence d'au moins une charge fossile solide pour obtenir une poudre,
dans lequel
la quantité d'eau résiduelle en sortie de l'étape a) de séchage est comprise entre 0,0 % et 5,0 % massique par rapport à la masse totale de la charge,
les dimensions de la charge fossile solide introduite à l'étape c) de co-broyage sont comprises entre 1,0 et 100 millimètres et de préférence entre 2,0 et 80 millimètres ou entre 3,0 et 70 millimètres,
la charge fossile solide, entrant dans l'étape c) de co-broyage à un taux d'humidité compris entre 3,1 et 30,0 % massique, préférentiellement entre 4,0 et 25,0 % massique ou entre 5,0 et 20,0 % massique, et
dans lequel une étape d) de séchage de la poudre obtenue à l'issue de l'étape c) est réalisée simultanément à l'étape c) de co-broyage.

2. Procédé selon l'une quelconque des revendications précédentes dans lequel la biomasse est choisie parmi la biomasse lignocellulosique solide.

3. Procédé selon l'une quelconque des revendications précédentes comprenant une étape i) de prétraitement de la biomasse, de préférence de broyage primaire.

4. Procédé selon l'une quelconque des revendications précédentes dans lequel l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,1 et 15 bar, de manière préférée entre 0,1 et 10 bar et de manière plus préférée entre 0,5 et 1,5 bar.

5. Procédé selon l'une quelconque des revendications précédentes comprenant une étape ii) de combustion des gaz de torréfaction (11) issu de l'étape b).

6. Procédé selon l'une quelconque des revendications précédentes dans lequel l'énergie issue de l'étape ii) de combustion des gaz de torréfaction (11) est utilisée pour apporter l'énergie thermique nécessaire dans une étape du procédé, de préférence aux étapes a), b) et/ou d)..

7. Procédé selon l'une quelconque des revendications précédentes dans lequel la charge fossile solide (9) introduite dans l'étape c) de co-broyage est choisie parmi les hydrocarbures fossiles solides tels que du charbon, du coke de pétrole, des résidus pétroliers, des sables bitumineux ou leurs dérivés et des schistes bitumineux ou leurs dérivés.

8. Procédé selon l'une quelconque des revendications précédentes dans lequel la charge fossile solide (9) est soumise à une étape iii) de séchage préliminaire.

9. Procédé selon l'une quelconque des revendications précédentes dans lequel l'effluent solide biomasse torréfiée issu de l'étape b) est introduit dans l'étape c) de co-broyage dans un pourcentage massique entre l'effluent solide biomasse torréfiée dans la charge totale solide compris entre 50 et 98 % massique ou entre 40 et 95% massique, ladite charge totale solide étant la somme de l'effluent solide de biomasse torréfiée et de la charge fossile.

10. Procédé selon l'une quelconque des revendications précédentes dans lequel la charge fossile solide, entrant dans l'étape c) de co-broyage a un taux d'humidité compris entre 5,0 et 20,0 % massique.

11. Procédé selon l'une quelconque des revendications précédentes comprenant une ou plusieurs étapes de stockage e) de l'effluent issu de l'une ou quelconque des étapes du procédé, de préférence de l'étape a), b), c), ou d).

12. Procédé selon l'une quelconque des revendications précédentes comprenant une étape f) de transport, de préférence de transport pneumatique.

13. Procédé selon l'une quelconque des revendications précédentes comprenant une étape g) de gazéification à une température comprise entre 800 et 1800°C, de préférence entre 1000 et 1600°C et plus préférentiellement entre 1200 et 1500°C et à une pression absolue avantageusement comprise entre 2 et 12 MPa, de préférence entre 2,5 et 6 MPa, et plus préférentiellement entre 3 et 5 MPa.

14. Procédé selon l'une quelconque des revendications précédentes, selon lequel la perte de masse anhydre de la charge lors de l'étape b) de torréfaction de la charge séchée issue de l'étape a) est choisie entre 1,0 et 40,0 % massique, de préférence entre 5,0 et 35,0 % massique, et notamment entre 15,0 et 30,0 % massique par rapport à la masse totale de la charge introduite dans ladite étape b) de torréfaction.

15. Procédé selon l'une quelconque des revendications précédentes, selon lequel l'étape de co-broyage c) est mise en oeuvre en présence d'un composé additionnel choisi parmi les cendres vitrifiées, du sable, du calcaire, de la chaux, pris seuls ou en mélange.

16. Procédé selon l'une quelconque des revendications précédentes, selon lequel l'effluent solide biomasse torréfiée (4) obtenue à l'issue de l'étape b) de torréfaction présente un taux d'humidité compris entre 0,0 et 3,0% massique.

## Patentansprüche

1. Verfahren zur Behandlung einer Charge, die feststoffliche Biomasse umfasst, wobei das Verfahren mindestens die folgenden Schritte umfasst:
a) einen Schritt des Trocknens der Charge bei einer Temperatur im Bereich von 20 bis 180 °C, während einer Zeitdauer im Bereich von 5 bis 180 Minuten,
b) einen Schritt des Röstens der getrockneten Charge, die aus dem Schritt a) stammt, um mindestens einen feststofflichen Stoffstrom gerösteter Biomasse herzustellen, und
c) einen Schritt des gemeinsamen Vermahlens des feststofflichen Stoffstroms gerösteter Biomasse, der aus dem Schritt b) stammt, in Gegenwart mindestens einer feststofflichen fossilen Charge, um ein Pulver zu erhalten,
wobei
die Menge an verbleibendem Wasser ausgangsseitig des Trocknungsschritts a) im Bereich von 0,0 % bis 5,0 Massen-% liegt, bezogen auf die Gesamtmasse der Charge,
die Abmessungen der feststofflichen fossilen Charge, die im Schritt c) des gemeinsamen Vermahlens zugeführt wird, im Bereich von 1,0 bis 100 Millimeter und vorzugsweise von 2,0 bis 80 Millimeter oder von 3,0 bis 70 Millimeter liegen, die feststoffliche fossile Charge mit einem Feuchtigkeitsgehalt im Bereich von 3,1 bis 30,0 Massen-%, vorzugsweise von 4,0 bis 25,0 Massen-% oder von 5,0 bis 20 Massen-%, in den Schritt c) des gemeinsamen Vermahlens gelangt, und
wobei ein Schritt d) des Trocknens des Pulvers, welches nach Abschluss des Schrittes c) erhalten wird, gleichzeitig mit dem Schritt c) des gemeinsamen Vermahlens durchgeführt wird.

2. Verfahren nach einem beliebigen der vorhergehenden Ansprüche, wobei die Biomasse aus feststofflicher lignocelluloseartiger Biomasse ausgewählt ist.

3. Verfahren nach einem beliebigen der vorhergehenden Ansprüche, das einen Schritt i) des Vorbehandelns der Biomasse, vorzugsweise des primären Vermahlens, umfasst.

4. Verfahren nach einem beliebigen der vorhergehenden Ansprüche, wobei der Schritt b) des Röstens bei einer Temperatur im Bereich von 200 bis 350 °C, vorzugsweise von 220 bis 340 °C, vorzugsweise von 250 bis 320 °C, und stärker bevorzugt von 270 bis 300 °C während einer Zeitdauer im Bereich von 5 bis 180 Minuten, und vorzugsweise von 15 bis 60 Minuten, bei einem absoluten Betriebsdruck durchgeführt wird, welcher vorzugsweise im Bereich von 0,1 bis 15 bar, auf bevorzugte Weise von 0,1 bis 10 bar und auf stärker bevorzugte Weise von 0,5 bis 1,5 bar liegt.

5. Verfahren nach einem beliebigen der vorhergehenden Ansprüche, wobei es einen Schritt ii) des Verbrennens der Röstgase (11) umfasst, welche aus dem Schritt b) stammen.

6. Verfahren nach einem beliebigen der vorhergehenden Ansprüche, wobei die Energie, welche aus dem Schritt ii) des Verbrennens der Röstgase (11) stammt, dazu verwendet wird, die thermische Energie zuzuführen, welche in einem Schritt des Verfahrens, vorzugsweise in den Schritten a), b) und/oder d), benötigt wird.

7. Verfahren nach einem beliebigen der vorhergehenden Ansprüche, wobei die feststoffliche fossile Charge (9), welche dem Schritt c) des gemeinsamen Vermahlens zugeführt wird, aus den feststofflichen fossilen Kohlenwasserstoffen wie etwa Kohle, Petrolkoks, Erdölrückständen, Ölsanden oder deren Derivaten sowie Ölschiefer oder dessen Derivaten ausgewählt ist.

8. Verfahren nach einem beliebigen der vorhergehenden Ansprüche, wobei die feststoffliche fossile Charge (9) einem Schritt iii) des vorgeschalteten Trocknens unterzogen wird.

9. Verfahren nach einem beliebigen der vorhergehenden Ansprüche, wobei der feststoffliche Stoffstrom gerösteter Biomasse, welcher aus dem Schritt b) stammt, dem Schritt c) des gemeinsamen Vermahlens derart zugeführt wird, dass der prozentuale Massenanteil zwischen dem feststofflichen Stoffstrom gerösteter Biomasse in der feststofflichen Gesamtcharge im Bereich von 50 bis 98 Massen-% oder von 40 bis 95 Massen-% liegt, wobei es sich bei der feststofflichen Gesamtcharge um die Summe aus dem feststofflichen Stoffstrom gerösteter Biomasse und der fossilen Charge handelt.

10. Verfahren nach einem beliebigen der vorhergehenden Ansprüche, wobei die feststoffliche fossile Charge, wenn sie in den Schritt c) des gemeinsamen Vermahlens gelangt, einen Feuchtigkeitsgehalt im Bereich von 5,0 bis 20,0 Massen-% hat.

11. Verfahren nach einem beliebigen der vorhergehenden Ansprüche, das einen oder mehrere Schritte e) des Speicherns des Stoffstroms umfasst, welcher aus einem oder einem beliebigen der Schritte des Verfahrens stammt, vorzugsweise aus dem Schritt a), b), c) oder d).

12. Verfahren nach einem beliebigen der vorhergehenden Ansprüche, wobei es einen Schritt f) das Förderns, vorzugsweise des pneumatischen Förderns, umfasst.

13. Verfahren nach einem beliebigen der vorhergehenden Ansprüche, wobei es einen Schritt g) des Vergasens bei einer Temperatur im Bereich von 800 bis 1800 °C, vorzugsweise von 1000 bis 1600 °C und stärker bevorzugt von 1200 bis 1500 °C und bei einem Absolutdruck umfasst, welcher vorteilhafterweise im Bereich von 2 bis 12 MPa, vorzugsweis von 2,5 bis 6 MPa, und stärker bevorzugt von 3 bis 5 MPa liegt.

14. Verfahren nach einem beliebigen der vorhergehenden Ansprüchen, gemäß welchem der Verlust an wasserfreier Masse der Charge beim Schritt b) des Röstens der getrockneten Charge, welche aus dem Schritt a) stammt, derart gewählt wird, dass er zwischen 1,0 bis 40,0 Massen-%, vorzugsweise zwischen 5,0 und 35,0 Massen-%, und insbesondere zwischen 15,0 und 30,0 Massen-% liegt, bezogen auf die Gesamtmasse der Charge, welche dem Schritt b) des Röstens zugeführt wird.

15. Verfahren nach einem beliebigen der vorhergehenden Ansprüche, gemäß welchem der Schritt des gemeinsamen Vermahlens c) in Gegenwart einer zusätzlichen Verbindung durchgeführt wird, die aus den Aschen, welche in den Glaszustand übergegangen sind, Sand, Kalkstein, Baukalk, für sich genommen oder in Mischung, ausgewählt ist.

16. Verfahren nach einem beliebigen der vorhergehenden Ansprüche, gemäß welchem der feststoffliche Stoffstrom gerösteter Biomasse (4), welcher nach Abschluss des Schrittes b) des Röstens erhalten wird, einen Feuchtigkeitsgehalt im Bereich von 0,0 bis 3,0 Massen-% aufweist.

## Claims

1. Process for the treatment of feedstock comprising solid biomass, said process comprising at least the following stages:
a) a stage of drying said feedstock at a temperature of between 20 and 180°C, for a time of between 5 and 180 minutes,
b) a stage of torrefaction of the dried feedstock resulting from stage a) in order to produce at least one torrefied biomass solid effluent, and
c) a stage of cogrinding the torrefied biomass solid effluent resulting from stage b) in the presence of at least one solid fossil feedstock in order to obtain a powder,
in which:
the amount of residual water at the outlet of the drying stage a) is between 0.0% and 5.0% by weight, with respect to the total weight of the feedstock,
the dimensions of the solid fossil feedstock introduced in the cogrinding stage c) are between 1.0 and 100 millimetres and preferably between 2.0 and 8 millimetres or between 3.0 and 7 millimetres,
the solid fossil feedstock entering the cogrinding stage c) has a moisture content of between 3.1% and 30.0% by weight, preferentially between 4.0% and 25.0% by weight or between 5.0% and 20.0% by weight, and
in which a stage d) of drying the powder obtained on conclusion of stage c) is carried out simultaneously with the cogrinding stage c).

2. Process according to any one of the preceding claims, in which the biomass is chosen from solid lignocellulosic biomass.

3. Process according to either one of the preceding claims, comprising a stage i) of pretreatment of the biomass, preferably of primary grinding.

4. Process according to any one of the preceding claims, in which the torrefction stage b) is carried out at a temperature of between 200 and 350°C, preferably between 220 and 340°C, preferably between 250 and 320°C and more preferentially between 270 and 300°C, for a period of time of between 5 and 180 minutes and preferentially between 15 and 60 minutes, at an absolute operating pressure preferentially of between 0.1 and 15 bar, preferably between 0.1 and 10 bar and more preferably between 0.5 and 1.5 bar.

5. Process according to any one of the preceding claims, comprising a stage ii) of combustion of the torrefaction gases (11) resulting from stage b).

6. Process according to any one of the preceding claims, in which the energy resulting from stage ii) of combustion of the torrefaction gases (11) is used to provide the thermal energy necessary in a stage of the process, preferably in stages a), b) and/or d).

7. Process according to any one of the preceding claims, in which the solid fossil feedstock (9) introduced in the cogrinding stage c) is chosen from solid fossil hydrocarbons, such as coal, petroleum coke, petroleum residues, bituminous sands or their derivatives and oil shales or their derivatives.

8. Process according to any one of the preceding claims, in which the solid fossil feedstock (9) is subjected to a stage iii) of preliminary drying.

9. Process according to any one of the preceding claims, in which the torrefied biomass solid effluent resulting from stage b) is introduced into the cogrinding stage c) in a percentage by weight between the torrefied biomass solid effluent in the total solid feedstock of between 50% and 98% by weight or between 40% and 95% by weight, said total solid feedstock being the sum of the torrefied biomass solid effluent and of the fossil feedstock.

10. Process according to any one of the preceding claims, in which the solid fossil feedstock entering the cogrinding stage c) has a moisture content of between 5.0% and 20.0% by weight.

11. Process according to any one of the preceding claims, comprising one or more stages of storage e) of the effluent resulting from one or some of the stages of the process, preferably from stage a), b), c) or d).

12. Process according to any one of the preceding claims, comprising a stage f) of transportation, preferably of air conveying.

13. Process according to any one of the preceding claims, comprising a stage g) of gasification at a temperature of between 800 and 1800°C, preferably between 1000 and 1600°C and more preferentially between 1200 and 1500°C, and at an absolute pressure advantageously of between 2 and 12 MPa, preferably between 2.5 and 6 MPa and more preferentially between 3 and 5 MPa.

14. Process according to any one of the preceding claims, in which the anhydrous weight loss of the feedstock during stage b) of torrefaction of the dried feedstock resulting from stage a) is chosen between 1.0% and 40.0% by weight, preferably between 5.0% and 35.0% by weight and in particular between 15.0% and 30.0% by weight, with respect to the total weight of the feedstock introduced in said torrefaction stage b).

15. Process according to any one of the preceding claims, according to which the cogrinding stage c) is carried out in the presence of an additional compound chosen from vitrified ash, sand, limestone or lime, taken alone or as a mixture.

16. Process according to any one of the preceding claims, according to which the torrefied biomass solid effluent (4) obtained at the conclusion of the torrefaction stage b) exhibits a moisture content of between 0.0% and 3.0% by weight.
